# EUROPEAN PATENT SPECIFICATION

(11) **EP 2 985 441 B1**
(45) Date of publication and mention of the grant of the patent: **09.08.2017**
(21) Application number: 15746091.6
(22) Date of filing: 30.01.2015
(51) Int. Cl.: F02D 29/00, F02D 29/02, F02D 41/02, F02D 41/16, F02D 41/12

(54) **INTERNAL COMBUSTION ENGINE CONTROL DEVICE**
STEUERUNGSVORRICHTUNG FÜR EINEN VERBRENNUNGSMOTOR
DISPOSITIF DE COMMANDE DE MOTEUR À COMBUSTION INTERNE

(30) Priority: 04.02.2014 JP 2014019405
(43) Date of publication of application: 17.02.2016
(73) Proprietor: Suzuki Motor Corporation, Hamamatsu, Shizuoka 432-8611 (JP)
(72) Inventor: MAEDA Sadaharu, Hamamatsu-shi Shizuoka 432-8611 (JP)
(74) Representative: Henkel, Breuer & Partner
(86) International application number: PCT/JP2015/052732
(87) International publication number: WO 2015/119062

(56) References cited:
- EP-A2- 1 428 716
- EP-A2- 1 637 720
- FR-A1- 2 809 059
- JP-A- H09 144 586
- JP-A- 2006 183 514
- JP-A- 2010 127 089

## Description

### Technical Field

The present invention relates to an internal combustion engine control device. Especially, the present invention relates to an internal combustion engine control device for performing a feedback control of a rotational speed (engine rotational speed) of an internal combustion engine to an idle rotational speed during the creep driving of a vehicle.

### Background Art

Conventionally, in an internal combustion engine mounted on a vehicle, a control device performs a feedback control of an engine rotational speed (that is a rotational speed of the internal combustion engine) to an idle rotational speed during the creep driving of the vehicle.

Such internal combustion engine control device is disclosed in JP H11-336593A, for example.

The engine control device according to JP H11-336593A is an engine control device that performs a feedback control for causing an idle rotational speed to converge to a target rotational speed. The engine control device includes a creep driving state means and a permission means. The creep driving state means determines whether or not a vehicle is in a creep driving state. The permission means permits a feedback control when the vehicle is in the creep driving state. The feedback control of the engine rotational speed to the idle rotational speed is performed even during the creep driving of the vehicle.

FR 2809059A1 discloses a method and device for controlling engine idling speed in a vehicle equipped with an automated manual transmission which involves a temporary elevation of a target value of a feedback control of the engine idle speed for a situation of a transition from an open state of a clutch to a half-open state of the clutch in order to avoid engine stall.

EP 1637720A2 discloses a method and device for controlling engine idling speed in a vehicle equipped with an automated manual transmission which involves setting a PID control appropriate for a creep driving to suppress the occurrence of a hunting phenomenon of an engine speed when a clutch is locked up.

### Summary of Invention

### Problems to be Solved by Invention

By the way, in JP H11-336593A described above, when a vehicle travels on a downward slope in a fully closed state of an accelerator and a vehicle speed thereof is thus increased, a clutch is engaged and an engine rotational speed is increased with an increase in the vehicle speed. In the case where a feedback control of a target rotational speed of the engine rotational speed to an idle rotational speed is performed in order to allow the vehicle to travel in a creep mode, the actual engine rotational speed is increased in synchronization with the vehicle speed. Thereby, the deviation between the idle rotational speed and the actual engine rotational speed is increased and a feedback control amount (correction amount) is continuously updated to be increased to the negative side (decreased). Further, when, in such a state, a driver performs a shift operation from a D range to an N range and a transmission is thus shifted from the D range to the N range, there is an inconvenience that engine stop occurs.

Therefore, the present invention aims to provide an internal combustion engine control device that is capable of preventing the occurrence of engine stop even during a shift operation.

### Means for solving the problems

The prevent invention provides an internal combustion engine control device with the features of claim 1 for performing a feedback control of a rotational speed of an internal combustion engine to an idle rotational speed during the creep driving of a vehicle, and a vehicle provided with the internal combustion engine control device.

### Effects of Invention

The present invention is capable of preventing the occurrence of engine stop even during a shift operation by changing a lower limit value of a feedback control amount according to an engagement state of a clutch.

### Brief Description of Drawings

Fig. 1 is a block diagram of a control means of an internal combustion engine control device. (Embodiment)
Fig. 2 is a system configuration diagram of the internal combustion engine control device. (Embodiment)
Fig. 3 is a flow chart of the control of the internal combustion engine. (Embodiment)
Fig. 4 is a time chart of the control of the internal combustion engine. (Embodiment)

### Embodiment for carrying out Invention

The present invention achieves an object of preventing the occurrence of engine stop even during a shift operation by changing a lower limit value of a feedback control amount according to an engagement state of a clutch.

### [Embodiment]

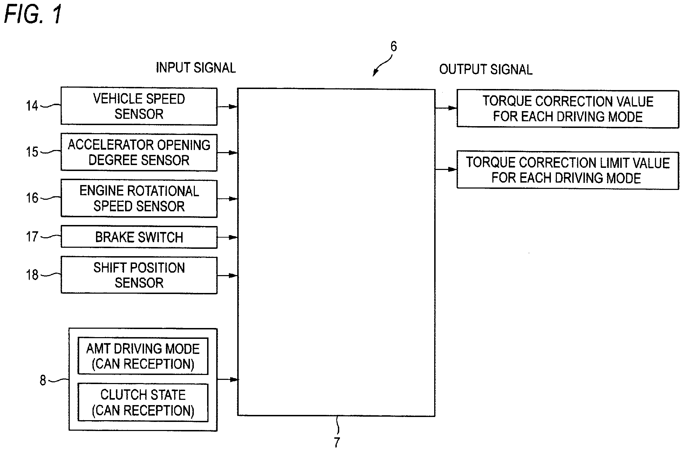

Figs. 1 to 4 show an embodiment of the present invention.

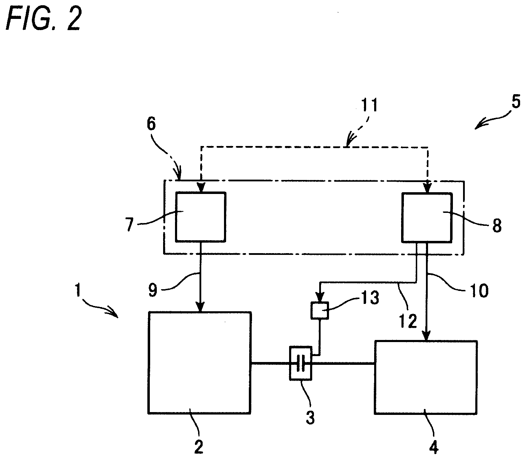

As shown in Fig. 2, a power train 1 mounted on a vehicle includes an internal combustion engine 2 and a manual transmission (AMT; hereinafter, referred to as a 'transmission') 4 that is connected to the internal combustion engine 2 through a clutch 3.

The internal combustion engine 2 and the transmission 4 are automatically controlled by a control means 6 that constitutes a control device 5. The control device 5 is a so-called cooperative control device.

The control means 6 includes an internal combustion engine control means 7 and a transmission control means 8.

The internal combustion engine control means 7 is connected to the internal combustion engine 2 by a communication line 9 for the internal combustion engine, thereby controlling the internal combustion engine 2. The transmission control means 8 is connected to the transmission 4 by a communication line 10 for the transmission, thereby controlling the transmission 4. The internal combustion engine control means 7 and the transmission control means 8 are communicably connected to each other by a communication line 11.

The transmission control means 8 is connected to a clutch actuator 13 by a connecting line 12 and controls the actuation of the clutch 3 into a stop idle state (open state), a half-clutch state and a full engagement state.

As shown in Fig. 1, in addition to being connected to the transmission control means 8, the internal combustion engine control means 7 is connected to a vehicle speed sensor 14 for detecting a vehicle speed, an accelerator opening degree sensor 15 for detecting a depression state of an accelerator pedal as an accelerator opening degree, an engine rotational speed sensor 16 for detecting an engine rotational speed that is a rotational speed of the internal combustion engine 2, a brake switch 17 that is turned on and off by detecting a depression state of a brake pedal, and a shift position sensor 18 for detecting a range (shift position) state of the transmission 4. Signals from these sensors are inputted to the internal combustion engine control means 7.

Further, as an input signal from the transmission control means 8, an AMT driving mode signal of the transmission 4 and a clutch state signal of the clutch 3 are inputted to the internal combustion engine control means 7.

The internal combustion engine control means 7 outputs a torque correction value signal for each driving mode and a torque correction limit value signal for each driving mode, as an output signal to the internal combustion engine 2.

During the creep driving of the vehicle, the internal combustion engine control means 7 performs a feedback control of the engine rotational speed (that is a rotational speed of the internal combustion engine 2) to an idle rotational speed by a required feedback control amount (correction amount).

Further, the internal combustion engine control means 7 changes a lower limit value of the feedback control amount (correction amount) according to an engagement state of the clutch 3.

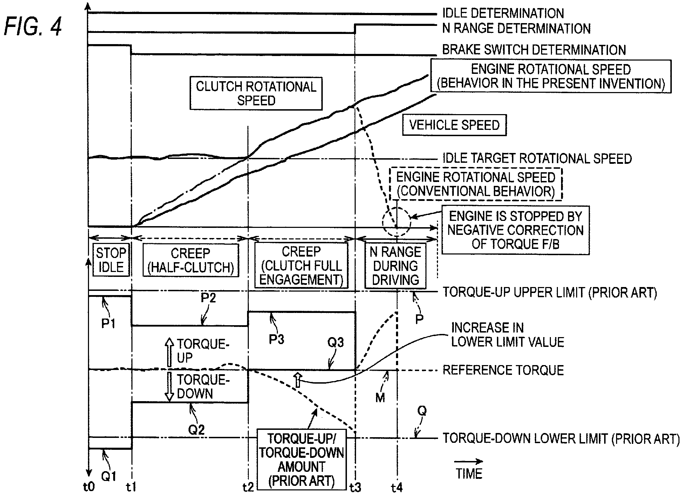

Furthermore, the internal combustion engine control means 7 is adapted to reduce the absolute value of the lower limit value of the feedback control amount when the lower limit value of the feedback control amount is a negative value and the clutch 3 is in a full engagement state, compared to when the clutch 3 is in a half-clutch state. In this manner, by reducing the lower limit value of the feedback control amount (correction amount) of the target rotational speed in the full engagement state of the clutch during the driving of the vehicle (by reducing the absolute value of the lower limit value when the lower limit value is a negative value), excessive negative correction can be prevented. As a result, it is possible to prevent the occurrence of engine stop under each circumstance (see Fig. 4).

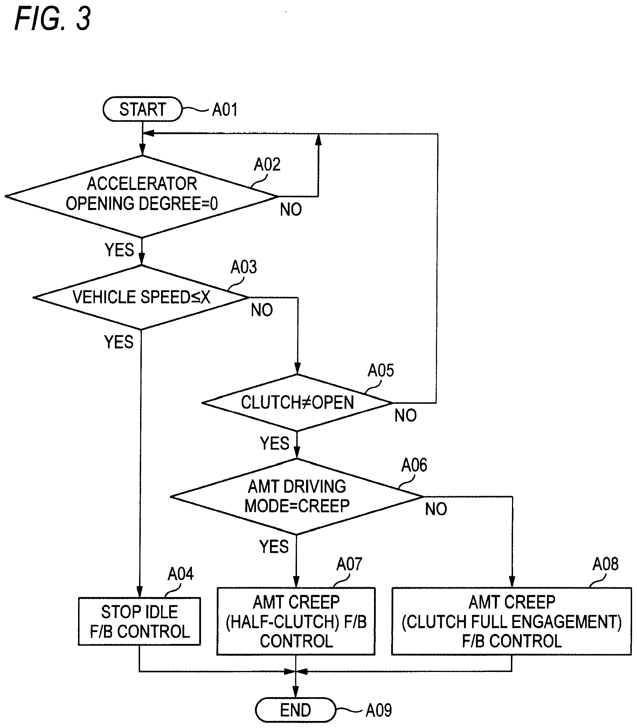

Next, a control of the internal combustion engine 2 according to the present embodiment will be described with reference to a flow chart in Fig. 3.

As shown in Fig. 3, when a program of the control means 6 is started (Step A01), first, it is determined whether or not an accelerator opening degree is zero (0) (accelerator opening degree=0) (Step A02). Namely, in the Step A02, it is determined whether or not the engine rotational speed is in a state of being controlled to the idle rotational speed. When the Step A02 is NO and the engine rotational speed is not in a state of being controlled to the idle rotational speed (accelerator opening degree≠0), the above determination is continued.

When the Step A02 is YES and the engine rotational speed is in a state of being controlled to the idle rotational speed (accelerator opening degree=0), the vehicle is assumed as a state capable of actuating a feedback control condition of the engine rotational speed. In this case, it is determined whether or not the vehicle speed is equal to or less than a threshold vehicle speed X for determination (vehicle speed≤X) (Step A03). Namely, in the Step A03, it is determined whether the vehicle is in a stop state or the vehicle is in a driving state.

When the Step A03 is YES and the vehicle speed is equal to or less than the threshold vehicle speed X for determination, a feedback control of a target rotational speed for the stop idle is performed (Step A04).

On the other hand, when the Step A03 is NO and the vehicle speed is greater than the threshold vehicle speed X for determination, i.e., when it is determined by an output signal from the vehicle speed sensor 14 that the vehicle is in the driving state, it is determined whether or not the clutch 3 is not open (clutch≠open) (Step A05). Namely, in the Step A05, it is determined whether or not the clutch is not in an open state, i.e., whether or not the internal combustion engine 2 and the transmission 4 are not in a non-connection state, with reference to the clutch state signal of the transmission 4 which is transmitted from the transmission control means 8 to the internal combustion engine control means 7.

When the Step A05 is NO and the clutch 3 is in the open state, the program returns to the Step A02.

When the Step A05 is YES and the clutch 3 is not in the open state (the clutch is in an engagement state), it is determined whether or not the AMT driving mode=creep (Step A06). Namely, in the Step A06, it is determined whether the clutch is in a creep state by a half-clutch control, or, the clutch is in a creep state by a clutch full engagement control, with reference to the AMT driving mode signal of the transmission 4 which is transmitted from the transmission control means 8 to the internal combustion engine control means 7.

When the Step A06 is YES and the clutch is in the creep state by the half-clutch control, a feedback control of the target rotational speed in the half-clutch state is performed (Step A07).

When the Step A06 is NO and the clutch is in the creep state by the clutch full engagement control, a feedback control of the target rotational speed in the clutch full engagement state is performed (Step A08).

After processing of the Step A04, after processing of the Step A07, or after processing of the Step A08, the program is ended (Step A09).

Fig. 4 shows a time chart of the control of the internal combustion engine 2 according to the present embodiment.

As shown in Fig. 4, in a stop idle period (time t0 to t1), a half-clutch period (time t1 to t2) and a clutch full engagement period (time t2 to t3), in a prior art, a torque-up upper limit value P in the internal combustion engine 2 is a constant value. On the contrary, in the present embodiment, by changing the lower limit value of the feedback control amount (correction amount), a first torque-up upper limit value P1 is set in the stop idle period (time t0 to t1), a second torque-up upper limit value P2 is set in the half-clutch period (time t1 to t2), and a third torque-up upper limit value P3 is set in the clutch full engagement period (time t2 to t3). The first torque-up upper limit value P1 is less than the torque-up upper limit value P in the prior art. The second torque-up upper limit value P2 is less than the first torque-up upper limit value P1. The third torque-up upper limit value P3 is a value between the first torque-up upper limit value P1 and the second torque-up upper limit value P2.

Further, in the stop idle period (time t0 to t1), the half-clutch period (time t1 to t2) and the clutch full engagement period (time t2 to t3), in the prior art, a torque-down lower limit value Q in the internal combustion engine 2 is a constant value. On the contrary, in the present embodiment, by changing the lower limit value of the feedback control amount, a first torque-down lower limit value Q1 is set in the stop idle period (time t0 to t1), a second torque-down lower limit value Q2 is set in the half-clutch period (time t1 to t2) and a third torque-down lower limit value Q3 is set in the clutch full engagement period (time t2 to t3). The first torque-down lower limit value Q1 is less than the torque-down lower limit value Q. The second torque-down lower limit value Q2 is greater than the first torque-down lower limit value Q 1. The third torque-down lower limit value Q3 is equal to a reference torque value M. The third torque-down lower limit value Q3 is increased and set as the reference torque value M so that negative correction is not made.

In this manner, by changing the upper limit values P1 to P3 and the lower limit values Q1 to Q3 according the state of the clutch 3 as described above, it is possible to satisfy respective request.

Furthermore, as shown in Fig. 4, in the prior art, a torque down occurs in the clutch full engagement period (time t2 to t3). On the contrary, in the present embodiment, by setting the third torque-down lower limit value Q3 as the reference torque value M, the third torque-down lower limit value Q3 is held as the reference torque value M in the clutch full engagement period (time t2 to t3). Accordingly, it is possible to prevent the occurrence of the torque down.

Further, as shown in Fig. 4, after the end of the clutch full engagement period (time t3), in the prior art, the engine rotational speed is decreased, and thus, the engine stop occurs (time t4). On the contrary, in the present embodiment, the engine rotational speed is increased, and thus, the occurrence of the engine stop can be prevented.

Accordingly, it is possible to determine the stop idle period, the creep state in the half-clutch period and the creep state in the clutch full engagement period. Thus, the calculation of the feedback control amount (correction amount) of the target rotational speed is switched for each period, so that it is possible to set the feedback control amount according to each state of the clutch 3. Therefore, it is possible to manage the internal combustion engine 2 in more advanced manner.

As a result, in the present embodiment, the control means 6 changes the lower limit value of the feedback control amount according to an engagement state of the clutch 3.

In this manner, since the lower limit value of the feedback control amount is changed according to the engagement state of the clutch 3, it is possible to prevent the occurrence of the engine stop.

Further, the control means 6 is adapted to reduce the absolute value of the lower limit value of the feedback control amount when the lower limit value of the feedback control amount is a negative value and the clutch 3 is in the full engagement state, compared to when the clutch 3 is in the half-clutch state.

In this manner, since the absolute value of the lower limit value of the feedback control amount is reduced when the lower limit value of the feedback control amount is a negative value and the clutch 3 is in the full engagement state, compared to when the clutch 3 is in the half-clutch state, it is possible to prevent the occurrence of the engine stop.

In the present embodiment, in the case where the clutch state signal and the AMT driving mode signal are not transmitted to the internal combustion engine control means or where the internal combustion engine control means cannot receive these signals, the differential rotation between the rotational speed of an input shaft of the transmission and the engine rotational speed may be used as substitute. Similarly, the rotational speed of an output shaft of the transmission or the rotational speed of the input shaft of the transmission, which is back-calculated from a vehicle speed, may be used as substitute.

### Industrial Applicability

The internal combustion engine control device according to the present invention is applicable to the control for various internal combustion engines.

### Reference Numerals List

- 1: Power Train
- 2: Internal Combustion Engine
- 3: Clutch
- 4: Transmission (Manual Transmission: AMT)
- 5: Control Device
- 6: Control Means
- 7: Internal Combustion Engine Control Means
- 8: Transmission Control Means
- 9: Communication Line for Internal Combustion Engine
- 10: Communication Line for Transmission
- 11: Communication Line
- 12: Connecting Line
- 13: Clutch Actuator
- 14: Vehicle Speed Sensor
- 15: Accelerator Opening Degree Sensor
- 16: Engine Rotational Speed Sensor
- 17: Brake Switch
- 18: Shift Position Sensor

## Claims

1. An internal combustion engine control device (5) for a vehicle that has a powertrain (1) which includes an internal combustion engine (2), an automatically controlled manual transmission (4) and a clutch (3) arranged to be controlled into an open state, a half-clutch state and a full engagement state, wherein creep driving can take place with the clutch (3) in the half-clutch state and the full engagement state,
wherein the internal combustion engine control device (5) is configured to perform a feedback control of a rotational speed of the internal combustion engine (2) to an idle rotational speed during creep driving of the vehicle and comprises a control means (6) configured to change a lower limit value (Q) of a feedback control amount according to the engagement state of the clutch (3), and
wherein the control means (6) is configured to reduce an absolute value of the lower limit value of the feedback control amount when the lower limit value of the feedback control amount is a negative value and the clutch (3) is in the full engagement state, compared to when the clutch is in the half-clutch state.

2. A vehicle comprising
a powertrain (1) which includes an internal combustion engine (2), an automatically controlled manual transmission (4) and a clutch (3) arranged to be controlled into an open state, a half-clutch state and a full engagement state, wherein creep driving can take place with the clutch (3) in the half-clutch state and the full engagement state; and
an internal combustion engine control device (5) according to claim 1.

## Patentansprüche

1. Eine Verbrennungsmotorsteuervorrichtung (5) für ein Fahrzeug, das einen Antriebsstrang (1) besitzt, der einen Verbrennungsmotor (2), eine automatisch gesteuerte manuelle Transmission (4) und eine Kupplung (3), die angeordnet ist um in einen offenen Zustand, einen halbgekuppelten Zustand und einen Volleingriffszustand gesteuert zu werden, wobei eine Kriechfahrt stattfinden kann, wenn sich die Kupplung (3) in dem halbgekuppelten Zustand und dem Volleingriffszustand befindet, aufweist,
wobei die Verbrennungsmotorsteuervorrichtung (5) konfiguriert ist, um eine Rückkopplungssteuerung einer Rotationsgeschwindigkeit des Verbrennungsmotors (2) zu einer Leerlaufrotationsgeschwindigkeit während einer Kriechfahrt des Fahrzeugs auszuführen, und ein Steuermittel (6) aufweist, das konfiguriert ist, um einen unteren Grenzwert (Q) einer Rückkopplungssteuergröße gemäß dem Eingriffszustand der Kupplung (3) zu verändern, und
wobei das Steuermittel (6) konfiguriert ist, um einen Absolutwert des unteren Grenzwerts der Rückkopplungssteuergröße zu verringern, wenn der untere Grenzwert der Rückkopplungssteuergröße ein negativer Wert ist und die Kupplung (3) sich in dem Volleingriffszustand befindet, verglichen damit, wenn sich die Kupplung in dem halbgekuppelten Zustand befindet.

2. Ein Fahrzeug mit
einem Antriebsstrang (1), der einen Verbrennungsmotor (2), eine automatisch gesteuerte manuelle Transmission (4) und eine Kupplung (3), welche in einen offenen Zustand, einen halbgekuppelten Zustand und einen Volleingriffszustand gesteuert werden kann, aufweist, wobei eine Kriechfahrt erfolgen kann, wenn sich die Kupplung (3) in dem halbgekuppelten Zustand und dem Volleingriffszustand befindet, und
einer Verbrennungsmotorsteuervorrichtung (5) gemäß Anspruch 1.

## Revendications

1. Dispositif (5) de commande d'un moteur à combustion interne pour un véhicule, qui a un groupe (1) motopropulseur, comprenant un moteur (2) à combustion interne, une transmission (4) manuelle commandée automatiquement et un embrayage (3) agencé pour être mis dans un état ouvert, un état semi-embrayé et un état d'embrayage complet, une marche à vitesse extra lente pouvant avoir lieu alors que l'embrayage (3) est dans l'état semi-embrayé et dans l'état d'embrayage complet,
dans lequel le dispositif (5) de commande du moteur à combustion interne est configuré pour effectuer une commande de réaction d'une vitesse de rotation du moteur (2) à combustion interne, jusqu'à une vitesse de rotation de ralenti pendant la marche ultra lente du véhicule et comprenant un moyen (6) de commande, configuré pour modifier une valeur (Q) limite inférieure d'une quantité de commande de réaction, suivant l'état embrayé de l'embrayage (3) et
dans lequel le moyen (6) de commande est configuré pour réduire une valeur absolue de la valeur limite inférieure de la quantité de commande de réaction, lorsque la valeur limite inférieure de la quantité de commande de réaction est une valeur négative et lorsque l'embrayage (3) est dans l'état embrayé complètement, en comparaison de lorsque l'embrayage est dans l'état semi-embrayé.

2. Véhicule comprenant
un groupe (1) motopropulseur, qui comprend un moteur (2) à combustion interne, une transmission (4) manuelle commandée automatiquement et un embrayage (3), agencé pour être mis dans un état ouvert, un état semi-embrayé et un état embrayé complètement, une marche ultra lente pouvant avoir lieu lorsque l'embrayage (3) est dans l'état semi-embrayé et dans l'état embrayé complètement et
un dispositif (5) de commande d'un moteur à combustion interne suivant la revendication 1.
